# EUROPEAN PATENT SPECIFICATION

(11) **EP 1 135 994 B1**
(45) Date of publication and mention of the grant of the patent: **31.05.2006**
(21) Application number: 01106896.2
(22) Date of filing: 20.03.2001
(51) Int. Cl.: A23L 1/212, A23L 1/20

(54) **Process for the preparation of a 'vegetable yogurt' by fermentation of fruits or vegetables**
Verfahren zur Herstellung von 'pflanzlichem Joghurt' durch Obst- oder Gemüse-Fermentation
Procédé de préparation d'un 'yaourt végétal' par fermentation de fruits ou légumes

(30) Priority: 22.03.2000 IT VI000049
(43) Date of publication of application: 26.09.2001
(73) Proprietor: PASELUMA ELETTRICA S.r.l., 36010 Chiuppano, (Vicenza) (IT)
(72) Inventor: Zuccato, Remo, 36010 Chiuppano(Vicenza) (IT)
(74) Representative: Bettello, Pietro

(56) References cited:
- EP-A- 0 853 889
- EP-A- 1 169 925
- WO-A-97/49303
- US-A- 2 967 108
- US-A- 5 922 374
- DATABASE WPI Section Ch, Week 200035 Derwent Publications Ltd., London, GB; Class D13, AN 2000-409274 XP002161337 & RU 2 136 175 C (UNIV MOSC APPL BIOTECHN) , 10 September 1999 (1999-09-10)

## Description

### Field of The Invention

This invention relates to a process capable of allowing the preparation of a vegetable yogurt as well -as the vegetable yogurt produced by this process.

### Background of The Prior Art

It is known that the lactic fermentation of alimentary products of animal origin (milk, meat) or vegetable origin (cabbage, white coffee, olives, cucumbers, etc.) is a method used since time immemorial to conserve the foods. In this method there is provided that the lactic bacteria present in nature or suitably added to the raw material determine the fermentation of the present sugars thus producing organic acids. The lowering of the pH which follows causes the inhibition of several microbic species, thus increasing in this manner the hygienic-sanitary safety and the conservability of the food. In addition, the metabolic activities of the microorganisms responsible for the lactic fermentations determine the sensorial transformation of the raw material and the production of new and tasty food.

Among the products fermented on the basis of milk, yogurt is defined as the product obtained by coagulation of the milk without eliminating the serum, by the action of specific lactic bacteria (Streptococcus thermophilus and Lactobacillus delbrueckii subsp. bulgarius) which are inoculated jointly in the milk and are found in the finished products alive and viable and in great quantity.

The metabolic activities of the two lactic bacteria inoculated in yogurt guarantee the conservability of the product, determine the specific organoleptic properties and influence the structure itself and the consistency of the yogurt.

In addition, both in yogurt and in fermented milks in which the addition of lactic microflora having probiotic activity, a role is recognized which may be defined of the "medical" type, due to the beneficial action which the added microflora may carry out with respect to the human organism.

The yogurt, in the several types, (classical, with fruit, to drink with different amounts of fats, etc.) is unquestionably an extremely wholesome and beneficial product and endowed with very rich properties from the nutritive point of view, due to the presence in the interior of proteins, vitamins and mineral salts.

However, in spite of the well known beneficial effects exerted by fermented milks, including yogurt, there are groups of people who, for a reason of diet or health requirements, may not use products based on milk of animal origin. In particular, the number of people who have allergies and/or have an intolerance to the proteins of milk or to lactose is in substantial increase and therefore they may not consume yogurt, even if yogurt could be beneficial for them.

In addition, it is known that the lactic fermentation of the raw materials of vegetable origin relates mostly to the production of sauerkraut, olives, cucumbers or other fermented green vegetables and there are many patent documents which describe specific methodologies and processes for the production of these foods. By way of examples, the following documents are being mentioned: U.S.3,932,674; French 2,770,973; CN 1,175,366; G.B. 2,234,661; U.S. 4,342,786.

In US-A-5922374 and RU-C1-2136175 it is described a process that permits to obtain a semi-finished product from vegetable material.

Among the documents which relate to the fermentation of substrates of vegetable origin, there should be mentioned in particular the patents which describe particular processes capable of allowing the fermentation of a milk derived from soya or other vegetables with the following production of fermented curdled milks or products similar to cheese. In particular, the patent EPA 0988793 describes a process capable of allowing the production of fermented soya milk. In this process the soya milk is treated with a coagulating agent, it is pasteurized and subsequently it is inoculated with singular strains or mixture of strains which promote the fermentation process up to reaching a pH of 3.5-5.0.

The document WO-A-97/43906 describes a process which provides a fermentation phase to obtain a cheese, a curdled material or a yogurt starting from soya milk.

On the contrary, the patent EP-A-0500132 describes a process for the production of a curdled material starting from a soya milk, in which process being provided a phase of acidification obtained by addition of a chemical agent or lactic bacteria having fermentation activity.

Finally, U.S. A-3,950,544 describes a process capable of allowing the preparation of yogurt from a soya flour.

A similar product is obtained by means of the process described in EP-A-0853889.

In WO-A-9749303 is described a process in which it is provided the utilization of tomato. However the utilization of tomato obliges to a remarcable utilization of modifying agents of PH and this is not useful for the genuineness of the finished product.

A great part of these documents have the object of producing products which allow the consumer to obtain proteinaceous materials and other nutritional substances also for people who do not tolerate and/or are allergic to proteins of milk and lactose.

It should also be kept in mind that in addition to the people mentioned hereinabove, some consumers give up the utilization of milk and its derivatives also for ethical reasons because absolutely they do not take products of animal origin. It should also be noted that the organoleptic properties of all the products derived from soya and in particular the lactic products and yogurt are rather scarce and certainly not comparable to the properties of analogous products produced on the basis of animal milk.

In addition, the procedures for the production of these products are relatively complex and expensive. All these facts have resulted in a modest diffusion of the products mentioned hereinabove which are sold mostly in stores of vegetable products, microbiotic and similar stores and only in very small quantities in normal commercial establishments and, in particular, in supermarkets and hypermarkets.

### Summary of The Invention

The first object of the present invention is to provide a process capable of achieving a product similar to yogurt obtained exclusively starting from raw materials of vegetable origin including soya. With the latter there is provided the integral utilization of the seed and without passage through the lactic phase. This process is simple and economical and in addition the organoleptic properties of the product obtained by this process are acceptable and superior to the products known at present.

In addition, by means of the process of this invention it is possible to offer to the consumer the possibility of choosing between a vegetable yogurt with or without fats and to obtain yogurts of a variety of taste.

According to this invention, the process for the preparation of vegetable yogurt involves fermentation and the starting material is characterized by the fact that it requires a plurality of vegetable substances of different vegetable species, which are ground and mixed in different ratios. In fact the process of the invention may be carried out starting from different types of fruit and green vegetables. In particular, in the typology of the product called vegetable biological yogurt the green vegetables and the fruit originate from cultivation of biological types certified as such according to the laws in force and do not contain genetic materials or proteins of transgenic origin.

At first the green vegetables and/or the fruit are washed to eliminate residues from the ground or other contaminating material. Then the skin or more external parts when lettuce, cabbage or savoy is used, are then removed and afterwards the remainder is ground according to the necessity using a suitable apparatus.

At the end of the grinding phase the addition of water in variable amounts is carried out according to the type of green vegetables being used for the purpose of achieving the desired consistency. The concentration of sugars and the values of the pH which may be necessary, are preferably brought to values compatible with the development of lactic bacteria mixing in suitable ratios different typologies of fruit and/or green vegetables.

For the purpose of avoiding the development of the natural microflore present in green vegetables or in the fruit used as the starting material or acquired from the environment during the phases of washing, preparation and grinding, the step of proceeding successively to a treatment of thermal reclamation (pasteurization) is carried out. The latter step is carried out at a temperature of 70°-90° C for 10 seconds, in manner to guarantee both the destruction of the present microflore and the irreversible denaturation of the enzymes which might cause the formation of defects in the product.

After the pasteurization phase is ended, the vegetable substrate is cooled and it is maintained at a temperature compatible with the development of the lactic bacteria which are going to be utilized to carry out the fermentation process.

In the case in which the choice is made to operate exclusively with the two microbich species (Streptococcous Thermophilus and Lactobacillus delbrueckii subsp. bulgaricus) utilized for the production of yogurt from animal milk, the temperature is kept at a value of about 40°C.

On the contrary, if the choice is made to proceed to the inoculation of mesophile microorganisms, as Lactobacillus plantarum, Lactobacillus paracasei, Lactobacillus sakei, Lactobacillus curvatus, Leuconostoc spp., it is necessary to operate at a temperature of about 30°C. The lactic bacteria added to the vegetable substrate may be selected among strains already available in commerce in lyophilized form, which are usually utilized for the production of yogurt, fermented vegetables or vegetables put in bags.

After a preliminary phase of activation of the dehydrated cultures in isotonic solution (peptonated water or saline solution, the inoculation is carried out in a manner which must be such to guarantee for each microorganism the presence of at least 1,000,000 units forming a colony per gram of vegetable substrate.

In addition to the fermenting microflora mentioned hereinabove, probiotic flora may be added. They are constituted by particular strains of lactic bacteria or by bifidobacteria which are selected in view of the beneficial action which they may manifest on the health of the consumer.

The fermentation is carried out at a controlled temperature for 1-2 days, up to reaching a value of final pH 3.8-4.5.

It is important to prevent the pH from reaching lower values because they could affect the vitality of the present lactic bacteria and could reduce their presence in the product ready for consumption.

On the other hand, values of pH higher than 4.5 could cause the development of pathogenous microflora or alternating substances such as sporigenous microorganisms surviving the pasteurization treatment.

At the end of the fermentation phase substances as fragrances and/or natural thickening agents, fruit puree, fruit in small pieces or cereals may be added for the purpose of obtaining the desired taste, flavor and consistency.

Finally the product is packaged in small pots or jars and is kept at a refrigeration temperature up to the moment of consumption. Maintaining the cooling in the phases of transportation, commercialization and conservation must be guaranteed for the purpose of maintaining a high concentration of alive and vital lactic bacteria in the finished product in the same manner as this is requested in the yogurt produced from animal milk.

As already mentioned hereinabove it is possible prior to the fermentation step to add fats or vegetable oils so that the yogurt being obtained contains some fats but only of vegetable oils.

The process described in this application is intrinsically simple and economical to carry out and allows to obtain an alimentary product which joins the beneficial properties of a yogurt of animal origin with the taste of fruit or green vegetables. The taste being obtained is extremely variable so that it may be adapted to the particular requirements of the consumer and finally also the amount of fat contained in the yogurt may be varied within broad limits.

## Claims

1. A process for the preparation of a yoghurt-like alimentary product (vegetable yoghurt) made by fermentation of vegetable products wherein a plurality of fruits or green vegetable components falling in variety of vegetable species, are used; several of these fruits or green vegetable components are ground and mixed in different ratios with water added to achieve a mixture with desired consistency, comprising the steps:
- that preferably by mixing said fruits or green vegetable components the concentration of sugars and the pH value of said mixture are adjusted to values compatible with development of lactic acid bacteria,
- pasteurising said mixture
- cooling and maintaining said pasteurised mixture at temperatures compatible with development of desired lactic acid bacteria,
- inoculating lactic bacteria cultures to said pasteurised mixture in order to effect fermentation thereof,
- carrying out fermentation up to reaching a final pH value of 3.8-4.5,
- wherein the pH value is selected such that the high concentration of alive and vital lactic bacteria is achieved,
- packaging the finished alimentary product and
- maintaining at refrigeration temperature values which can guarantee high concentration of alive and vital lactic acid bacteria in the final product.

2. A method according to claim 1, wherein prior to the fermentation step, fats or vegetable oils are added to said mixture.

3. A method according to claims 1 or 2, wherein additives for obtaining the desired taste, flavour and consistency are added to said mixture, preferably at the end of preceding fermentation step.

4. The alimentary product, in particular vegetable yoghurt, manufactured according to claim 1 to 3.

## Patentansprüche

1. Verfahren zum Herstellen eines joghurtartigen Nahrungsmittels (pflanzlicher Joghurt), hergestellt durch Fermentation pflanzlicher Produkte, wobei eine Vielzahl von Frucht- oder grünpflanzlichen Komponenten, welche eine Vielzahl von Pflanzensorten umfassen, verwendet werden, und mehrere dieser Früchte oder grünpflanzlichen Komponenten zerkleinert und in unterschiedlichen Verhältnissen mit zugesetztem Wasser vermischt werden, um eine Mischung mit gewünschter Konsistenz zu erhalten, umfassend die Schritte:
- Einstellen der Zuckerkonzentration und des pH-Wertes der Mischung auf mit der Entwicklung von Milchsäurebakterien kompatible Werte, vorzugsweise durch Mischen der Frucht- oder grünpflanzlichen Komponenten,
- Pasteurisieren der Mischung,
- Abkühlen und Halten der pasteurisierten Mischung auf Temperaturen, welche mit der Entwicklung der gewünschten Milchsäurebakterien kompabitel sind,
- Beimpfen der pasteurisierten Mischung mit Milchsäurebakterienkulturen, um die Mischung zu fermentieren,
- Ausführen des Fermentierens bis zum Erreichen eines End-pH-Wertes von 3,8 bis 4,5,
- wobei der pH-Wert derart ausgewählt wird, dass eine hohe Konzentration von lebenden und vitalen Milchsäurebakterien erreicht wird,
- Verpacken des fertiggestellten Lebensmittels, und
- Aufrechterhalten von Kühltemperaturen, welche eine hohe Konzentration von lebenden und vitalen Milchsäurebakterien im fertigen Erzeugnis sicherstellen können.

2. Verfahren nach Anspruch 1, wobei vor dem Fermentationsschritt Fette oder pflanzliche Öle der Mischung zugesetzt werden.

3. Verfahren nach den Ansprüchen 1 oder 2, wobei vorzugsweise zum Ende des vorhergehenden Fermentationsschrittes Additive der Mischung zugesetzt werden, um den angestrebten Geschmack, die angestrebte Geschmacksrichtung und die angestrebte Konsistenz zu erhalten.

4. Lebensmittelprodukt, insbesondere pflanzlicher Joghurt, hergestellt nach den Ansprüchen 1 bis 3.

## Revendications

1. Procédé pour la préparation d'un produit alimentaire de type yaourt (yaourt végétal) fabriqué par fermentation de produits végétaux, dans lequel on utilise une pluralité de composants de fruits ou de légumes verts entrant dans une variété d'espèces végétales, plusieurs de ces composants de fruits et de légumes verts sont broyés et mélangés dans différents rapports avec de l'eau ajoutée pour obtenir un mélange ayant la consistance souhaitée, comprenant les étapes suivantes :
- de préférence en mélangeant lesdits composants de fruits ou de légumes verts, on ajuste la concentration des sucres et la valeur du pH dudit mélange à des valeurs compatibles avec le développement de bactéries d'acide lactique,
- on pasteurise ledit mélange,
- on refroidit et on maintient ledit mélange pasteurisé à des températures compatibles avec le développement de bactéries d'acide lactique souhaitées,
- on inocule des cultures de bactéries lactiques dans ledit mélange pasteurisé afin d'en effectuer la fermentation,
- on effectue la fermentation jusqu'à obtention d'un pH d'une valeur finale de 3,8 à 4,5,
- la valeur du pH étant choisie de sorte que la concentration élevée en bactéries lactiques vivantes et vitales soit obtenue,
- on emballe le produit alimentaire fini et
- on maintient le tout à des valeurs de températures de réfrigération qui peuvent garantir une concentration élevée de bactéries d'acide lactique vivantes et vitales dans le produit final.

2. Procédé selon la revendication 1, dans lequel, avant l'étape de fermentation, des graisses ou des huiles végétales sont ajoutées audit mélange.

3. Procédé selon la revendication 1 ou 2, dans lequel on ajoute audit mélange des additifs pour obtenir le goût, la saveur et la consistance souhaités, de préférence à la fin de l'étape de fermentation précédente.

4. Produit alimentaire, en particulier yaourt végétal, fabriqué selon l'une des revendications 1 à 3.
